(19) Europäisches Patentamt
European Patent Office
Office européen des brevets

(11) Publication number: 0 318 836 A2

# (12) EUROPEAN PATENT APPLICATION

(21) Application number: 88119579.6

(51) Int. Cl.[4]: C08G 75/02

(22) Date of filing: 24.11.88

(30) Priority: 27.11.87 US 126081

(43) Date of publication of application:
07.06.89 Bulletin 89/23

(84) Designated Contracting States:
AT BE CH DE ES FR GB GR IT LI LU NL SE

(71) Applicant: PHILLIPS PETROLEUM COMPANY
5th and Keeler
Bartlesville Oklahoma 74004(US)

(72) Inventor: Liang, Yeon Fong
1308 Woodland Rd
Kohler, WI 53044(US)
Inventor: Senatore, Guy
11A Adobe Trail
Borger, TX 79008(US)

(74) Representative: Dost, Wolfgang, Dr.rer.nat.,Dipl.-Chem. et al
Patent- & Rechtsanwälte Bardehle . Pagenberg . Dost . Altenburg . Frohwitter . Geissler & Partner Galileiplatz 1 Postfach 86 06 20
D-8000 München 86(DE)

## (54) Poly(arylene sulfide) process compositions and articles of manufacture.

(57) Poly(arylene sulfide) and articles of manufacture prepared therefrom are prepared in a reaction mixture which contains a p-dihalo substituted aromatic compound, a polyhalo substituted aromatic compound, and a p-dihalo alkyl-substituted aromatic compound. The p-dihalo alkyl-substituted aromatic compound is employed in an amount from about 3 to about 10 mole percent, and the polyhaloaromatic compound in a minor amount, generally less than 1 mole percent, to produce a crystalline poly(arylene sulfide) for extrusion into film, fiber or molded products of described physical properties.

EP 0 318 836 A2

# POLY(ARYLENE SULFIDE) PROCESS COMPOSITIONS AND ARTICLES OF MANUFACTURE

## Field of the Invention

This invention relates to arylene sulfide polymer. In one aspect it relates to methods of preparation of arylene sulfide polymers. It further relates to articles of manufacture produced from poly(arylene sulfide)s. In a specific aspect, the invention relates to films and fibers produced from poly(arylene sulfide)s and to methods for modifying the properties of such films and fibers.

## Background of the Invention

The production of arylene sulfide polymers for a variety of industrial and commercial uses is known. U.S. Patent 3,354,129 describes a commercially useful method for preparing poly(arylene sulfide)s in a reaction mixture containing p-dichlorobenzene, a sulfur source/sulfur compound such as sodium sulfide, an N-methyl-2-pyrrolidone. The process of preparing poly(arylene sulfide)s has been further developed to provide polymers having improved properties and wider more specialized uses in industry.

Interest in the use of poly(arylene sulfide)s for the preparation.of films and fibers has grown as methods have been developed for preparing poly(phenylene sulfide) of high molecular weight and modified properties. A promising field of application for poly(arylene sulfide)s is film for commercial and industrial applications. For applications in film, it is desirable to provide a polymeric material which has superior tensile properties and draw ratio. In order to produce a good film, such as, for example, biaxially oriented thick film, the cast film should be amorphous (non-crystalline) before stretching. Poly(arylene sulfide)s are generally crystalline in that they exhibit a temperature of melt crystallization (Tmc) when cooled from a melt. In current preparation methods, quenching is used to prevent crystallization of poly(arylene sulfide) cast film. This amorphous film is reheated to a working temperature prior to stretching.

Quenching of a conventional poly(arylene sulfide) cast film to prevent crystallization is less effective as film thickness increases. Conventional poly(arylene sulfide) cast film has a relatively high Tmc (about 190-215 °C) and therefore crystallizes easily during cooling. The center of a thick film is insulated and is less affected by quenching so, therefore, the center of a quenched thick film of high Tmc is crystalline. It is therefore desirable, for film applications, preferably thick film, to provide a poly(arylene sulfide) which has a relatively low Tmc. A poly(arylene sulfide) film of relatively low Tmc would be amorphous even at slow quench rates, and a poly(arylene sulfide) thick film of relatively low Tmc would be amorphous at conventional quench rates.

It is therefore an object of the invention to provide a process of producing a poly(arylene sulfide) of relatively low Tmc. It is a further object of the invention to provide a poly(arylene sulfide) of relatively low Tmc which is useful in films, fibers and molded objects. It is a further object to provide poly(arylene sulfide) films having improved tensile properties and draw ratio. It is a further object to produce a thick poly(arylene sulfide) film having a relatively low Tmc.

## Summary of the Invention

According to the invention, a crystalline poly(arylene sulfide) having a relatively low Tmc is prepared by contacting, in a reaction mixture, a sulfur source, a p-dihalo substituted aromatic compound, a polyhalo substituted aromatic compound, about 3-10 mole percent of a p-dihalo alkyl-substituted aromatic compound, and a polar organic compound, under polymerization conditions effective for the preparation of a poly(arylene sulfide) having a low Tmc. The poly(arylene sulfide) having a low Tmc is a crystalline poly(arylene sulfide) comprising from about 3 to about 10 mole percent incorporated units from the p-dihalo alkyl-substituted aromatic compound. Preferably it will comprise from about 0.001 to about 1 mole percent incorporated units from the polyhalo substituted aromatic compound. The mole percent values given are based on the total moles of aromatic compounds in the reaction mixture, or for the polymers based on incorporated aromatic units.

The invention polymers, containing up to about 10 mole percent of the alkyl-substituted aromatic units, are crystalline by virtue of the relatively low amount of these units present in the polymer. The polymers thus have a crystalline melting point and are crystallizable, i.e. have a temperature point of crystallization from the melt if determined under the proper test conditions.

Further according to the invention, an article of manufacture is formed from the crystalline poly(arylene sulfide) prepared as described above. In a specific aspect, the article of manufacture can be a film, fiber, or molded object formed from a crystalline poly(arylene sulfide) having a relatively low Tmc.

The crystalline poly(arylene sulfide) can be characterized as prepared according to my process, and from the components employed can be further characterized as comprising from about 90 to 97 mole percent of aromatic units of the form

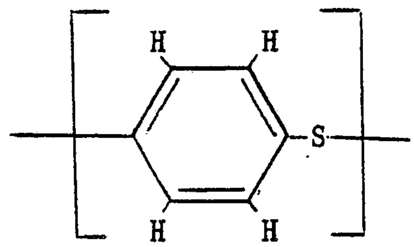

and from about 3 to about 10 mole percent of aromatic units of the form

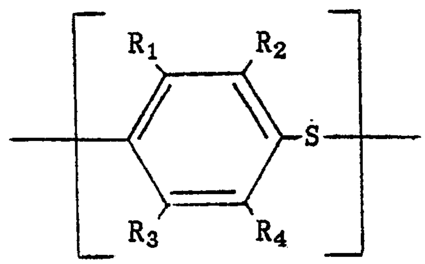

wherein $R_1$, $R_2$, $R_3$ and $R_4$ are independently selected from $C_1$ to $C_{12}$ alkyl groups and hydrogen, and from about 0.001 to about 1 mole percent of aromatic units of the form

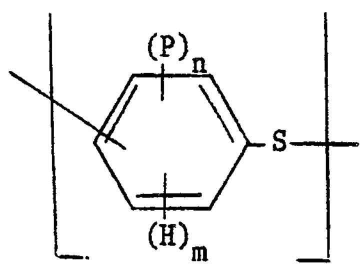

wherein P represents a continuing polymer chain, m is an integer from 0 to 3, n is an integer from 1 to 4, and $n+m = 4$ based on the total moles of aromatic units in the poly(arylene sulfide).

In a further specific embodiment, the article of manufacture can be a thick film prepared by extruding my crystalline poly(arylene sulfide) of low Tmc into a thick film and biaxially orienting the extruded film.

## Detailed Description of the Invention

The process and product of my invention employs three types of haloaromatic compounds: p-dihalo substituted aromatic compounds, polyhalo substituted aromatic compounds, and dihalo alkyl-substituted aromatic compounds.

p-Dihalo substituted aromatic compounds which are employed in preparing the polymers according to the invention can be represented by the formula

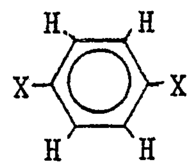

wherein each X is selected from the group consisting of fluorine, chlorine, bromine and iodine. Examples of p-dihalo substituted aromatic compounds which correspond to the above formula include p-dichlorobenzene, p-dibromobenzene, p-diiodobenzene and 1-chloro-4-bromobenzene, and the like, and mixtures thereof. The preferred p-dihalo substituted aromatic compound, due to its effectiveness and commercial availability, for addition to the reaction mixture is p-dichlorobenzene. The p-dihalo substituted aromatic compound constitutes the major portion of the aromatic components of the reaction mixture and will be the major aromatic compound incorporated into the poly(arylene sulfide). It will generally be present in the reaction mixture, and consequently in the poly(arylene sulfide) in the amount of about 90 to about 97 mole percent, preferably about 90 to about 94 mole percent, based on the total moles of haloaromatic compounds employed.

Polyhalo substituted aromatic compounds, as that term is used herein, are those having more than two halogen substituents per molecule and no alkyl or other substituents of the aromatic structure other than halogens. Examples of such polyhalo aromatic compounds having more than two halogen substituents per molecule which can be added to the poly(arylene sulfide) reaction mixture include 1,2,3-trichlorobenzene, 1,2,3-trichlorobenzene, 1,3,5-trichlorobenzene, 1,2,3,5-tetrabromobenzene, and hexachlorobenzene, and the like, and mixtures thereof. The preferred polyhalo substituted aromatic compound due to its effectiveness and commercial availability, is 1,2,4-trichlorobenzene. It will generally be present in the reaction mixture, and consequently in the resulting poly(arylene sulfide), in an amount of about 0.001 to about 1 mole percent, based on the total moles of haloaromatic compounds employed. Preferably, the halo substituted aromatic compound will be present in an amount of about 0.1 to about 0.5 mole percent.

p-Dihalo alkyl-substituted aromatic compounds which are added to the reaction mixture can be represented by the formula:

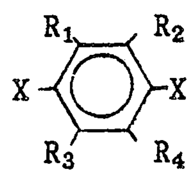

wherein $R_1$, $R_2$, $R_3$ and $R_4$ are independently selected from $C_1$ to $C_{12}$ alkyl groups and hydrogen, X is selected from chlorine, bromine, fluorine and iodine, and at least one of $R_1$, $R_2$, $R_3$ and $R_4$ is an alkyl group.

Examples of such p-dihalo alkyl-substituted aromatic compounds which can be employed in the process of the invention include 2,5-dichloro-p-xylene, 2,5-diiodo-p-xylene, and 2,5-dichloro-1,3,6-trimethylbenzene, and the like, and mixtures thereof. The preferred p-dihalo alkyl substituted aromatic compound is 2,5-dichloro-p-xylene. It will generally be present in the reaction mixture, and consequently in the poly(arylene sulfide), in an amount of about 3 to about 10 mole percent, preferably about 6 to about 10 mole percent, based on the total moles of haloaromatic compounds employed.

The sulfur source present in the reaction mixture can be sulfur or a sulfur compound. Suitable sulfur compounds include, for example, alkali metal and alkaline earth metal thiosulfates, substituted and unsubstituted thioureas, thiocarbamates, thiocarbonates, carbon disulfide, carbon oxysulfide, thioamides, and organic sulfur containing compounds selected from mercaptans, mercaptides, and sulfides having an alpha or beta activating substituent. Such sulfur compounds are generally employed in combination with a base, as discussed below, which base will generally be present in the reaction mixture in an amount of about 1 to 6, preferably about 1.8 to about 4, gram equivalents per gram atom of sulfur in the sulfur compound, although one skilled in the art will know that the optimum amount of base will depend upon the specific sulfur compound selected. Such sulfur compounds and the bases employed are known in the art as disclosed in, for example, U.S. Patent 3,919,177 the disclosure of which is incorporated herein by reference.

The more commonly used and presently preferred sulfur compounds are alkali metal bisulfides, alkali metal sulfides, and elemental sulfur. The alkali metal bisulfides include anhydrous or hydrated bisulfides of sodium, lithium, potassium, rubidium and cesium. It is generally necessary to use a base when an alkali

metal bisulfide sulfur compound is employed. If no base is added, however, the alkali metal bisulfide will generally be present in an amount of about 0.8 to about 1.5 gram-moles per gram-mole of the haloaromatic compound. If a base is added to the reaction mixture, the base will generally be employed in an amount of about 0.3 to about 4, preferably from about 0.4 to about 2, gram-equivalent per gram-mole of alkali metal bisulfide. The preferred alkali metal bisulfide is sodium bisulfide, NaSH.

The alkali metal sulfides, including monosulfides in anhydrous and hydrated form, can be represented by the formula $M_2S$ where M is an alkali metal selected from the group consisting of sodium, potassium, lithium, rubidium and cesium. The preferred sulfide due to its availability is sodium sulfide, $Na_2S$.

Elemental sulfur can be used as the sulfur source. When elemental sulfur is used, a base will generally be added to the reaction mixture in an amount within the range of about 1 to about 5, preferably about 1.5 to about 4, gram equivalents per gram atom of sulfur.

Although the ratio of reactants can vary considerably, the ratio of gram-moles of haloaromatic compound to gram-atoms of divalent sulfur in the sulfur source, except when the sulfur source is elemental sulfur, should be within the range of about 0.8 to about 2, and preferably from about 0.95 to about 1.3, except as previously shown for the use of alkali metal bisulfides in the absence of base as herein described. When elemental sulfur is used as the sulfur source, the ratio of gram-moles of haloaromatic compound to gram-atoms of sulfur should be within the range of about 0.8 to about 2, preferably about 0.82 to about 1.

Bases which can be employed include, for example, alkali metal hydroxides and carbonates such as lithium hydroxide, sodium hydroxide, potassium hydroxide, rubidium hydroxide, cesium hydroxide, magnesium hydroxide, calcium hydroxide, strontium hydroxide, borium hydroxide, sodium carbonate, potassium carbonate, rubidium carbonate, cesium carbonate, and the like, and mixtures thereof. If desired, the hydroxide can be produced in situ, for example, by the reaction of the corresponding oxide with water.

The polar organic compound used in the reaction mixture should be liquid at the reaction temperatures and pressures used, and is preferably an organic amide. The organic amide can be cyclic or acyclic and will generally have about 1 to 10 carbon atoms per molecule. Examples of suitable organic amides include, for example, formamide, acetamide, N-methylformamide, N,N-dimethylacetamide, N-ethylpropionamide, N,N-dipropylbutyramide, 2-pyrrolidone, N-methyl-2-pyrrolidone, ε-caprolactam, N-methyl-ε-caprolactam, N,N′-ethylenedi-2-pyrrolidone, hexamethylphosphoramide, tetramethylurea, and the like, and mixtures thereof. N-methyl-2-pyrrolidone due to its effectiveness and commercial availability, is the preferred organic amide.

It is preferable to include in the reaction mixture an alkali metal mono, di or poly carboxylate or other suitable chemical agent to increase the molecular weight of the poly(arylene sulfide) product. Included in the alkali metal carboxylates which can be employed are those represented by the formula $RC0_2M$ wherein R is a hydrocarbyl radical selected from alkyl, cycloalkyl, and aryl and combinations thereof such as alkylaryl, alkylcycloalkyl, arylalkyl, arylcycloalkyl, and the like, and mixtures thereof, the hydrocarbyl radical having 1 to about 20 carbon atoms, and M is as above. Preferably, R is an alkyl radical having 1 to about 6 carbon atoms or a phenyl radical and M is lithium or sodium. If desired, the alkali metal carboxylate can be employed as a hydrate or as a solution or dispersion in water.

Examples of some alkali metal carboxylates which can be employed include lithium acetate, sodium acetate, sodium formate potassium acetate, lithium propionate, sodium propionate, lithium 2-methylpropionate, rubidium butyrate, sodium valerate, cesium hexonoate, lithium heptanoate, lithium 2-methyloctonoate, potassium dodecanoate, sodium octadecanoate, lithium cyclohexanecarboxylate, potassium cyclohexylacetate, potassium benzoate, lithium benzoate, sodium benzoate, potassium m-toluate, lithium phenylacetate, sodium 4-phenylcyclohexane carboxylate, potassium p-tolylacetate, and the like, and mixtures thereof. The preferred alkali metal carboxylate, due to its effectiveness and commercial availability, is sodium acetate.

The gram-moles of alkali metal carboxylate per gram-mole of haloaromatic compound should be within the range of about 0.05 to about 4 and preferably from about 0.1 to about 2. The gram-moles of polar organic compound per gram-mole of haloaromatic compound should be within the range of about 1 to about 25.

The conditions of polymerization of poly(arylene sulfide)s are generally known and can vary widely. The process will generally include a pre-polymerization dehydration step, in which any excess water is distilled off from the mixture of the sodium source, the base, and the polymerization medium, i.e. polar organic compound. The carboxylate can be added to this mixture before or after the dehydration step. The aromatic reactants are added after dehydration. The polymerization reaction is conducted at a suitable polymerization temperature such as within the range of about 190°C to about 315°C, preferably about 225°C to 285°C. The reaction will usually be completed within about 1 hour to 8 hours. The pressure should be sufficient to

maintain the polar organic compound in liquid phase. The polymer can be recovered as desired, preferably by use of a separation agent, such as described in the process disclosed in U.S. 4,415,729, incorporated herein by reference.

The invention polymers, containing up to about 10 mole percent of the alkyl-substituted aromatic units, are crystalline by virtue of the relatively low amount of these units present in the polymer. The polymers thus have a crystalline melting point and crystallizable i.e. have a temperature point of crystallization from the melt if determined under the proper test conditions. However, this temperature of crystallization from the melt (Tmc) is fairly low making it relatively easy to form amorphous articles, e.g. films, from the molten polymer prior to reaching the Tmc. The amorphous articles are then reheated to a working temperature for further processing, such as stretching and annealing.

For crystalline polymers containing up to about 10 mole percent of the alkyl-substituted aromatic units, the crystalline melting point would be expected to be within the range of about 230° C to about 275° C. However, the inventive polymers generally have a temperature of crystallization from the melt (Tmc) of less than about 180° C as determined with a differential scanning calorimeter (DSC) by heating a sample to about 360° C, holding for 5 minutes, then cooling at the rate of about 20° C per minute. As Tmc decreases to less than about 150° C, there is not enough molecular motion to allow the sample to crystallize from the melt, i.e. have a detectable Tmc, under the above test conditions. A Tmc would appear if the DSC determination was run at slower cooling rates. Therefore, the failure to detect a Tmc does not indicate that one does not exist but rather that the cooling rate used was too fast.

The poly(arylene sulfide) polymers of the present invention can be formed into a film or sheet by any suitable process. The film-making process can generally include melt extrusion or melt pressing at a temperature between the melting point of the polymer and about 350° C followed by quenching to form an amorphous film. For subsequent annealing or biaxial orientation, an amorphous film is generally desired. A quench rate of greater than about 5° C/sec is generally necessary to produce an amorphous transparent film having a degree of crystallinity of less than about 15 percent. As used herein, the term "film" includes "sheet" although a distinction is sometimes made between these terms on the basis of the thickness of the object, a film being generally about 1-12 mil thick and a sheet being greater than about 10-12 mil thick.

The thus processed poly(arylene sulfide) film can be annealed and/or biaxially oriented if additional high temperature stability, tensile strength, and reduced thermal linear expansion are desired. The film can be biaxially oriented by a suitable process such as that described in U.S. Patent 4,286,018, incorporated herein by reference.

The poly(arylene sulfide) film is preferably biaxially oriented. This can be accomplished by two dimensional stretching in an area ratio of greater than 3, preferably greater than 4, and generally no greater than about 5. The orientation can be accomplished by simultaneous stretching, blowing or rolling at a temperature of about 80° C to about 120° C. A stretching process can be used in which the amorphous film is first stretched in one direction, usually longitudinally or in the machine direction, at a ratio of about 2 to about 5 and a temperature between about 80° and about 120° C. After longitudinal stretching, the film is stretched in the transverse direction at a ratio of about 1.5 to about 5 and a temperature between about 80° C and about 150° C to form a biaxially oriented film.

The biaxially oriented film can then be annealed by subjecting it to an elevated temperature within the range of about 180° C to the melting point while the film is maintained under tension. This heat treatment is conveniently carried out by use of a conventional film stretcher. The density of the film can be expected to increase as the result of such annealing.

## Examples

The following are examples illustrating the present invention. Particular materials employed, species, and conditions are intended to be further illustrative of this invention and not limitative of the reasonable scope thereof.

### Example I

This example describes a polymerization for the preparation of arylene sulfide polymers as disclosed herein.

To a 2-gallon, electrically heated, stirred stainless steel autoclave was added 568.7 grams (6 moles) aqueous sodium hydrosulfide solution, 254 grams (6.35 moles) sodium hydroxide pellets, 147.6 grams (1.8 moles) sodium acetate, and 1600 milliliters (16.6 moles) N-methyl-2-pyrrolidone (NMP). The contents were stirred and heated under atmospheric pressure until the air in the reactor was displaced by steam. The system was then closed, heated under autogenous pressure to 235° C, cooled to 185° C, and then dehydrated by distilling water (400 milliliters) until the NMP began to distill. The system was closed and a mixture of 830.6 grams (5.65 moles) 1,4-dichlorobenzene, 105.0 grams (0.6 mole) 2,5-dichloro-p-xylene, 4.54 grams (0.025 mole) 1,2,4-trichlorobenzene, and 325 milliliters (3.37 moles) NMP was pressured into the reactor. The system was heated under autogenous pressure at 235° C for 2 hours, then at 265° C for 3 hours. The contents were cooled to ambient room temperature, removed from the reactor, slurried and washed with hot water, collected on a suction filter, and finally rinsed with acetone. The polymer was dried in a vacuum oven at about 100° C.

The polymerization process was repeated several times with various amounts of trichlorobenzene. Summaries of the polymerizations are provided in Table I.

TABLE I

| PPS Terpolymers | | | | | | |
|---|---|---|---|---|---|---|
| | Mole % | | | Analysis | | |
| Polymer | DCB[(a)] | DCX[(b)] | TCB[(c)] | Melt Flow[(d)] | I.V.[(e)] | % Ash[(f)] |
| A | 90.40 | 9.60 | 0 | 337 | .19 | .51 |
| B | 90.29 | 9.59 | 0.12 | 170 | .19 | .75 |
| C | 90.26 | 9.58 | 0.16 | 89 | .26 | .76 |
| D | 90.18 | 9.58 | 0.24 | 55 | .29 | .76 |
| E | 90.11 | 9.57 | 0.32 | 113 | .23 | .44 |
| F | 90.04 | 9.56 | 0.40 | 64 | .32 | .47 |

(a) 1,4-Dichlorobenzene
(b) 1,5-Dichloro-p-xylene
(c) 1,2,4-Trichlorobenzene
(d) g/10 min. run in accordance with test method ASTM D 1238, Procedure B modified to use condition 315/5.0 with a 5 min. preheat time.
(e) Determined at 204° C on solutions containing .4 gram of terpolymer per 100 mL of 1-chloronaphthalene.
(f) Test method by ignition.

## Example II

This example describes films produced from the terpolymers prepared in Example I.

Films were prepared by compression molding 9 grams of polymer at 600° F (316° C) at 20,000 pounds ram force for 1 minute in a 5.5 inch X 5.5 inch X 0.016 inch (16 mil) thick aluminium picture frame, then quenched in ice water. The film (about 0.030 millimeters thick) was placed in a T.M. Long Film Stretcher Unit (T.M. Long Co.) at 225° F (107° C). One edge of the film was anchored while the opposite side and an adjacent side were pulled outwardly at the same rate (i.e. 1000% per minute) and in the same plane. The film was pulled in two directions (biaxially oriented) to any desired draw ratio, draw ratio being defined as the extended length divided by the original length. The maximum draw ratio is defined as the highest ratio a film can be biaxially oriented before breaking. The oriented film was then removed and allowed to cool. After cooling, the film retained its oriented extended shape and was further evaluated for tensile properties. In this manner, the control polymer A and the terpolymers B through F prepared in Example I were evaluated. Control polymers G and H (DCB/TCB copolymers), and control polymer I (DCB/DCX copolymer) were prepared and evaluated in the same manner, except control polymer I was not formed into film.

The results of melt crystallization temperature and crystalline melting point are given in Table II.

TABLE II

| Effect of Monomer Concentration on Non-annealed Biaxially Oriented Film | | | | | |
|---|---|---|---|---|---|
| | Mole % | | | | |
| Polymer | DCB[a] | DCX[b] | TCB[c] | | |
| Control: | | | | | |
| A | 90.40 | 9.60 | 0 | ND | 243 |
| G[e] | 99.81 | 0 | 0.19 | 207 | 275 |
| H[f] | 99.85 | 0 | 0.15 | -- | -- |
| I[h] | 97.0 | 3.0 | 0 | 180 | 271 |
| Invention: | | | | | |
| B | 90.29 | 9.59 | 0.12 | ND | 245 |
| C | 90.26 | 9.58 | 0.16 | ND | 241 |
| D | 90.18 | 9.58 | 0.24 | ND | 240 |
| E | 90.11 | 9.57 | 0.32 | ND | 241 |
| F | 90.04 | 9.56 | 0.40 | ND | 241 |

(a) 1,4-Dichlorobenzene
(b) 2,5-Dichloro-p-xylene
(c) 1,2,4-Trichlorobenzene
(d) Melt crystallization temperature determined with a DSC by heating 6-7 mg of quenched film to 360° C, holding for 5 minutes, and cooling at 20° C/min. (ND = none detected above 150° C at test conditions).
(e) Ryton® poly(phenylene sulfide) having a melt flow rate of 66.
(f) Ryton® poly(phenylene sulfide) having a melt flow rate of 50.
(g) Crystalline melting temperature determined with a DSC on quenched film.
(h) Melt flow rate of 308, and Tm and Tmc determined with a DSC on quenched pellets. This sample was not used to produce a film.

The results in Table II show that the inventive terpolymer films, polymers B-F inclusive based on 1,4-dichlorobenzene (illustrative of a p-dihalo substituted aromatic compound), 2,5-dichloro-p-xylene (illustrative of a p-dihalo alkyl-substituted aromatic compound), and 1,2,4-trichlorobenzene (illustrative of a polyhalo substituted aromatic compound) have the advantage of much lower Tmc's than conventional crystalline poly(arylene sulfide) polymers such as control polymer G. In addition, the results of control polymers A and I indicate that decreasing the level of 2,5-dichloro-p-xylene increases Tmc. Therefore, inventive terpolymers with lower levels of 2,5-dichloro-p-xylene would have higher Tmc's than inventive terpolymers B-F but would still be less than about 180° C as evidenced by the Tmc of control polymer I. The presence of Tm values indicates that the inventive terpolymers are crystallizable, i.e. would have a Tmc if determined under the proper test conditions. The failure to detect a Tmc for the inventive terpolymers indicates that the cooling rate used in the DSC determinations was too fast. Under the test conditions used, the Tmc is not detected if it is less than about 150° C. The advantage of the much lower Tmc's for the inventive terpolymers is that they do not crystallize as easily during cooling thereby improving the processability of the polymer into film, particularly thick film.

The films were then evaluated with each value of tensile properties based on an average of the best 5 out of 7 determinations and the results are given in Table III. The tensile properties were measured on biaxially oriented samples that were prepared using a draw ratio of 3.5 except where noted, with draw ratio being defined as the extended length divided by the original length. Maximum draw ratio is defined as the highest ratio a film can be biaxially oriented before breaking. Crystallinity index is a relative measure of the crystallinity of the film sample and not an absolute measure of crystallinity.

Increasing the maximum draw ratio generally results in films having improved properties, particularly higher tensile strengths. Operation would typically be near the maximum draw ratio to obtain improved properties.

Table III

Effect of Monomer Concentration on Properties of Non-annealed Biaxially Oriented Film

| | | Average Properties at a 3.5 Draw Ratio | | | |
|---|---|---|---|---|---|
| Polymer | Maximum Draw Ratio | Tensile Break, MPa[a] | Tensile Yield, MPa[a] | Elongation, % | Ci[b] |
| Control: | | | | | |
| A[c] | 3.0 | 78 | 60 | 69 | 45 |
| G[c] | 3.0 | 84 | 69 | 61 | 59 |
| H | 3.5 | 95 | 78 | 43 | -- |
| Invention: | | | | | |
| B | 4.0 | 78 | 62 | 53 | 48 |
| C | >4.0 | 77 | 67 | 50 | -- |
| D | 3.75 | 79 | 63 | 54 | 44 |
| E | 4.0 | 87 | 74 | 53 | -- |
| F | >4.0 | 105 | 78 | 63 | 42 |

(a) Measured in accordance with test method ASTM D 638.

(b) The crystallinity index, $C_i$, is measured by X-ray diffraction using $CuK_\alpha$ radiation using a sample area of about 1 $cm^2$ evaluated to a depth of about 5 mil (0.127 mm). The $C_i$ is calculated from the crystalline and total areas between 17° and 23° 2θ in the X-ray diffraction pattern as follows:

$$C_i = \frac{A\ cryst.}{A\ cryst. + A\ amorphous} \times 100$$

where A = area under diffraction curve.

(c) Properties were measured for films prepared using a draw ratio of 3.0.

The results in Table III show that the inventive terpolymer films, polymers B-F, have higher maximum draw ratios than the control polymer films A, G, and H (DCB/DCX copolymer and DCB/TCB copolymer). The higher maximum draw ratios of the inventive terpolymer films would allow operation at a higher draw ratio and result in improved properties. In addition, at a constant draw ratio, the tensile properties of the biaxilly oriented inventive terpolymer films are as good or better than the DCB/DCX copolymer film and are as good or better than the DCB/TCB copolymer films when the level of trichlorobenzene (TCB) monomer is at least about 0.32 mole percent based on the total amount of aromatic compound. However, increasing the draw ratio for the inventive terpolymer films would result in increasing the tensile properties above those measured at a draw ratio of 3.5.

Another indication of the crystallinity of the inventive terpolymer films is the presence of a crystallinity index. The crystallinity indexes of the inventive terpolymer films B, D and F indicate that the terpolymers are at least as crystalline as control polymer A and are only slightly less crystalline than control polymer A and are only slightly less crystalline than control polymer G.

## Claims

1. A process for making crystalline poly(arylene sulfide) having a Tmc of less than about 180 °C, characterized by subjecting to polymerization in admixture a polar organic compound, a sulfur source, a p-dihalo-substituted aromatic compound, a polyhalo-substituted aromatic compound, and from 3 to 10 mole percent of a p-dihaloalkyl-substituted aromatic compound based on the total moles of aromatic compounds in the reaction mixture.

2. The process of claim 1, characterized in that the sulfur source is selected from elemental sulfur, sodium sulfide, and sodium hydrosulfide, and the polar organic compound comprises N-methyl-2-pyrrolidone.

3. The process of claim 1 or 2, characterized in that the p-dihalo-substituted aromatic compound comprises p-dichlorobenzene, the polyhalo-substituted aromatic compound comprises 1,2,4-trichlorobenzene, and the p-dihaloalkyl-substituted aromatic compound comprises 2,5-dichloro-p-xylene.

4. The process of any of the preceding claims, characterized in that the p-dihalo-substituted aromatic compound is present in an amount of 90 to 97 mole percent, and the polyhalo-substituted aromatic compound is present in an amount of 0,001 to 1 mole percent, based on the total moles of aromatic compounds in the reaction mixture.

5. A composition, characterised by the content of a crystalline poly(arylene sulfide) having from 90 to 97 mole percent aromatic units of the formula I

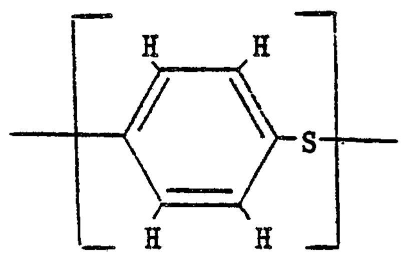

(I),

from 3 to 10 mole percent aromatic units of the formula II

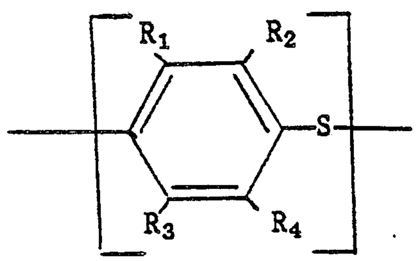

(II),

wherein $R_1$, $R_2$, $R_3$ and $R_4$ are independently selected from $C_1$ to $C_{12}$ alkyl groups and hydrogen; and from 0,001 to 1 mole percent aromatic units of the formula III

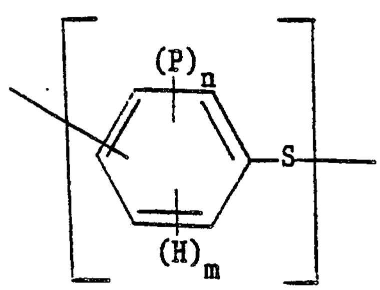

(III),

wherein P represents a continuing polymer chain, m is an integer from 0 to 3, n is an integer from 1 to 4 and n + m = 4 based on total moles of aromatic units in the poly(arylene sulfide).

6. The composition of claim 5, characterized in that the poly(arylene sulfide) has from 90 to 94 mole percent aromatic units of the formula I, from 6 to 10 mole percent aromatic units of the formula II, and from 0,1 to 0,5 mole percent of aromatic units of the formula III.

7. The composition of claim 5 or 6, characterized in that $R_1$ and $R_4$ are $CH_3$, $R_2$ and $R_3$ are hydrogen, and n is 1.

8. The use of the poly(arylene sulfide) as obtained in any of claims 1 to 4 or of the poly(arylene sulfide) composition of any of claims 5 to 7 for making articles of manufacture, including biaxially oriented, articles of manufacture, in particular in the form of films, filaments and fibers.